# EUROPÄISCHE PATENTANMELDUNG

(11) **EP 4 064 489 A1**
(43) Veröffentlichungstag der Anmeldung: **28.09.2022**
(21) Anmeldenummer: 21164224.4
(22) Anmeldetag: 23.03.2021
(51) Int. Cl.: H02H 3/16, H02H 3/33, H02H 7/26

(54) **ELEKTRISCHE ANLAGE MIT EINEM ELEKTRONISCHEN SCHUTZGERÄT, AUSWERTEINHEIT SOWIE VERFAHREN ZUM BETRIEB EINER ELEKTRISCHEN ANLAGE**

(71) Anmelder: Siemens Aktiengesellschaft, 80333 München (DE)
(72) Erfinder: Tannhäuser, Marvin, 91353 Hausen (DE)

(57) **Zusammenfassung**

Die vorliegende Erfindung betrifft eine elektrische Anlage (10), die an ein Dreiphasenwechselstromsystem (20) anschließbar ist und mindestens einen einphasigen Abgang (11) aufweist. Dem einphasigen Abgang (11) ist mindestens ein elektronisches Schutzgerät (12), insbesondere ein elektronisches Schutzschaltgerät, zugeordnet, mit Spannungsmessmitteln sowie Mitteln zum Übertragen mindestens eines Parameters repräsentierend einen Spannungsmesswert und/oder einen aus zumindest einem Spannungsmesswert abgeleiteten Wert und/oder einen Zeitstempel, der generiert wird, wenn der Momentanwert der Spannung einen konfigurierbaren Wert erreicht. Die elektrische Anlage (10) weist ferner eine Auswerteeinheit (13) auf oder ist mit einer Auswerteeinheit (13) verbindbar, welche Mittel zum Empfangen des Parameters, Mittel zum Vergleichen des Parameters mit einem Referenzwert, und Mittel zum Ermitteln anhand des Ergebnisses des Vergleichs, mit welchem Leiter des Dreiphasenwechselstromsystems (20) der Abgang (11) verbunden ist, aufweist.

## Beschreibung

Die Erfindung betrifft eine elektrische Anlage mit einem elektronischen Schutzgerät, eine Auswerteeinheit zum Einsatz im Zusammenhang mit einem elektronischen Schutzgerät sowie ein Verfahren zum Betrieb einer elektrischen Anlage.

Elektrische Anlagen, insbesondere Gebäude, werden heutzutage in der Regel mittels Schaltanlagen und/oder Unterverteilungen an ein Versorgungsnetz angeschlossen. Dabei erfolgt die Einspeisung typischerweise dreiphasig, die Abgänge bzw. Abzweige hingegen sind meist einphasig. Dabei werden die einphasigen Abgänge auf die dreiphasigen Abgänge so verteilt, dass eine möglichst gleichmäßige Belastung der drei Phasen bzw. Außenleiter erreicht wird.

Nach Abschluss der Installationsarbeiten ist in der Regel nicht mehr erkennbar, an welche Phase ein Abgang angeschlossen wird. Dies könnte zwar durch Verwendung einer Farbkodierung wie beispielsweise braun für die Phase L1, schwarz für die Phase L2 und grau für die Phase L3 gemäß IEC 60446 recht einfach erreicht werden, was aber eine konsequente Einhaltung dieses Farbschemas für die gesamte Installation voraussetzt. Die konsequente Einhaltung dieses Farbschemas scheitert in der Praxis jedoch häufig schon daran, dass dreiadrige Leitungen für den Transport von Einphasenwechselstrom routinemäßig mit den Farben braun, blau und grün-weiß angeboten und eingesetzt werden und der Installateur die anderen beiden Varianten (also schwarz und blau und grün-weiß bzw. grau und blau und grün-weiß) bei der Installation nicht oder nicht in ausreichender Länge zur Hand hat, so dass nicht gesichert ist, dass ein brauner Leiter mit L1 verbunden ist. Vielmehr muss davon auszugegangen werden, dass ein brauner Leiter an einer beliebigen Phase L1, L2, L3 angeschlossen ist.

Selbst in den Fällen, in denen Abgänge mit verschiedenen Farben realisiert wurden, besteht in vielen Fällen das Bedürfnis, überprüfen zu können, ob braun tatsächlich mit L1, schwarz tatsächlich mit L2 und grau tatsächlich mit L3 verbunden ist. In der Bundesrepublik Deutschland sind beispielsweise Altinstallationen anzutreffen, bei denen schwarz für L1 verwendet wird und braun oder sogar blau für L2, woraus ersichtlich wird, dass auf Farbkodierungen allein kein Verlass ist.

Die vorliegende Erfindung hat daher zur Aufgabe, eine elektrische Anlage mit einem elektronischen Schutzgerät, eine Auswerteeinheit sowie ein Verfahren zum Betrieb einer elektrischen Anlage anzugeben, mit dem/der festgestellt werden kann, an welchem Leiter eines dreiphasigen Systems ein einphasiger Abzweig angeschlossen ist.

Diese Aufgabe wird gelöst durch eine elektrische Anlage, die an ein Dreiphasenwechselstromsystem anschließbar ist und mindestens einen einphasigen Abgang aufweist, dem mindestens ein elektronisches Schutzgerät, insbesondere ein elektronisches Schutzschaltgerät, zugeordnet ist. Das elektronische Schutzgerät ist mit Spannungsmessmitteln ausgestattet sowie mit Mitteln zum Übertragen mindestens eines Parameters repräsentierend einen Spannungsmesswert und/oder einen aus zumindest einem Spannungsmesswert abgeleiteten Wert und/oder einen Zeitstempel, der generiert wird, wenn der Momentanwert der Spannung einen konfigurierbaren Wert erreicht. Die elektrische Anlage weist eine Auswerteeinheit auf oder ist mit einer Auswerteeinheit verbindbar, welche ausgestattet ist mit Mitteln zum Empfangen des Parameters, Mitteln zum Vergleichen des Parameters mit einem Referenzwert und Mittel zum Ermitteln anhand des Ergebnisses des Vergleichs, mit welchem Leiter des Dreiphasenwechselstromsystems der Abgang verbunden ist. Dabei kann die Feststellung, welchem Leiter der Abgang verbunden ist, ein relatives Ergebnis sein (im Sinne von: zwei Abgänge sind am gleichen oder an verschiedenen Leitern angeschlossen) oder ein absolutes Ergebnis (im Sinne von: der untersuchte Abgang ist an L1 angeschlossen).

Die vorliegende Erfindung betrifft ferner die genannte Auswerteeinheit, welche Bestandteil der elektrischen Anlage sein kann oder bei welcher es sich um eine bei Bedarf mit der elektrischen Anlage drahtlos oder drahtgebunden verbindbare, beispielsweise portable, Auswerteeinheit handeln kann, die sich also besonders zur Verwendung im Zusammenhang mit einer elektrischen Anlage der vorstehend beschriebenen Art eignet, und die sich auszeichnet durch Mittel zum Verbinden mit einem elektronischen Schutzgerät, insbesondere einem elektronischen Schutzschaltgerät, welches einem einphasigen Abgang eines Dreiphasenwechselstromsystems zugeordnet ist und welches einen Parameter repräsentierend einen Spannungsmesswert und/oder einen aus zumindest einem Spannungsmesswert abgeleiteten Wert und/oder einen Zeitstempel, der generiert wird, wenn der Momentanwert der Spannung einen konfigurierbaren Wert erreicht, bereitstellt, sowie durch Mittel zum Empfangen des Parameters, Mittel zum Vergleichen des Parameters mit einem Referenzwert und Mittel zum Ermitteln anhand des Ergebnisses des Vergleichs, mit welchem Leiter des Dreiphasenwechselstromsystems der Abgang verbunden ist (wiederum relativ oder absolut, wie oben erörtert).

Die vorliegende Erfindung betrifft ferner ein Verfahren zum Betreiben einer an ein Dreiphasenwechselstromsystem anschließbaren elektrischen Anlage. Gemäß des erfindungsgemäßen Verfahrens wird ein Parameter ermittelt, der folgendes repräsentieren kann: einen Spannungsmesswert und/oder einen aus zumindest einem Spannungsmesswert abgeleiteten Wert und/oder einen Zeitstempel, der generiert wird, wenn der Momentanwert der Spannung einen konfigurierbaren Wert erreicht. Dieser Parameter wird dabei durch ein einem einphasigen Abgang zugeordnetes elektronisches Schutzgerät, insbesondere ein elektronisches Schutzschaltgerät, ermittelt und mit einem Referenzwert verglichen. Anhand des Ergebnisses des Vergleichs wird ermittelt, mit welchem Leiter des Dreiphasenwechselstromsystems der Abgang verbunden ist (wiederum relativ oder absolut, wie oben erörtert).

Vorteilhafte Fortbildungen der vorliegenden Erfindung betreffen gleichermaßen die elektrische Anlage, die Auswerteeinheit und das Verfahren.

In vorteilhaften Weiterbildungen der Erfindung werden durch das elektronische Schutzgerät beispielsweise ein oder mehrerer der folgenden Parameter ermittelt: Momentanspannungswert. RMS-Wert der Spannung, Zeitstempel eines maximalen und/oder eines minimalen Spannungswerts, Zeitstempel eines Nulldurchgangs der Spannung und/oder die aktuelle Netzfrequenz.

Geeignete Referenzwerte sind beispielsweise Momentanspannungswerte eines Referenzphasenleiters des Dreiphasenwechselstromsystems und/oder die Zeitstempel maximaler und/oder minimaler Spannungswerte und/oder eines Nulldurchgangs der Spannung eines Referenzphasenleiters des Dreiphasenwechselstromsystems.

Der Referenzphasenleiter kann dabei ein vorausgewählter Phasenleiter L1, L2, L3 des Dreiphasenwechselstromsystems sein, der beispielsweise mit der Auswerteeinheit verbunden wird, um die Bildung des/der Referenzwerte(s) durch die Auswerteeinheit selbst zu ermöglichen.

In anderen Ausgestaltungen dienen die von einem weiteren elektronischen Schutzgerät gelieferten Parameter als Referenzwerte bzw. die von den dann mindestens zwei Schutzgeräten gelieferten Parameter dienen wechselseitig als Referenzwerte.

Anders ausgedrückt kann eine absolute Referenz gewählt werden, beispielsweise ein bekannter Phasenleiter L1, oder eine relative Referenz, beispielsweise der Phasenleiter eines benachbarten Abgangs. Letzteres ist ausreichend und oftmals sogar vorteilhaft, wenn es beispielsweise nur darauf ankommt, dass die Abgänge mit verschiedenen Phasen verbunden sind oder wenn für einen Abgang bekannt ist, an welcher der Phasenleiter er angeschlossen ist.

Dabei kann die Auswertung durch eines der Schutzgeräte selbst erfolgen, d.h. die Auswerteeinheit bzw. ihre Funktion kann in Form von Hardware, Firmware und/oder Software ein Schutzgerät integriert sein, oder die Auswerteeinheit kann verteilt auf mehrere Schutzgeräte implementiert sein. Die Generierung des Referenzwertes kann dabei durch eines der Schutzgeräte erfolgen oder durch eine zentrale Komponente, welche den Referenzwert dann an das oder die Schutzgeräte mit der integrierten und ggf. verteilten Auswerteeinheit übermittelt. Das Ergebnis der Auswertung kann anschließend an eine zentrale und/oder portable Einheit bzw. Komponente übertragen werden, die beispielsweise über eine geeignete Anzeigeeinheit und/oder Benutzerschnittstelle verfügt.

In wieder anderen Ausgestaltungen kann die Auswerteeinheit zentral für die elektrische Anlage implementiert sein oder als portables Gerät ausgebildet sein, welches mit beliebigen elektrischen Anlagen drahtlos oder drahtgebunden verbindbar ist, die Parameter empfängt und mit einem Referenzwert vergleicht, der entweder ebenfalls empfangen wird oder durch die Auswerteeinheit generiert wird, indem die Auswerteeinheit beispielsweise mit einem bekannten Phasenleiter des Dreiphasenwechselstromsystems verbunden wird.

Die ermittelte Information, mit welchem Leiter des Dreiphasenwechselstromsystems (d.h. PE, N, L1, L2, L3) ein bestimmter Abgang (in vielen praktischen Fällen: der vom Schutzgerät geschaltete Leiter des Abgangs) verbunden ist, kann entweder vor Ort einem Nutzer visuell angezeigt oder an eine übergeordnete Einrichtung zur weiteren Verarbeitung und/oder Anzeige weitergeleitet werden.

Die Anzeige kann beispielsweise so gestaltet sein, dass an jedem Schutzgerät permanent angezeigt wird, mit welchem Phasenleiter das Schutzgerät verbunden ist, und ein Fehler angezeigt wird, wenn der zu schaltende Leiter mit N oder PE verbunden ist. Dies kann in Form dreier grüner (für L1, L2, L3) und ein oder zwei roten LED (für N, PE) mit geeigneter Beschriftung erfolgen.

Insbesondere kann ein optisches oder akustisches Warnsignal ausgegeben und/oder eine Warnmeldung an eine übergeordnete Einrichtung übermittelt werden und/oder der wird Abgang abgeschaltet, wenn festgestellt wird, dass an dem Abgang der Nullleiter mit dem Phasenleiter vertauscht ist.

Insbesondere für komplexere Anlagen mit mehreren einphasigen Abgängen kann in einer vorteilhaften Weiterbildung der Erfindung vorgesehen sein, dass die ermittelte Ist-Zuordnung der Abgänge zu den Phasenleitern mit einer Soll-Zuordnung, z.B. einer Zuordnungstabelle, verglichen und das Ergebnis dieser Prüfung, insbesondere im Fall von Abweichungen, ausgegeben wird.

Insbesondere bei der Verwendung portabler Auswerteeinheiten kann in vorteilhaften Weiterbildungen der Erfindung vorgesehen sein, dass die ermittelte Ist-Zuordnung, mit welchem Leiter des Dreiphasenwechselstromsystems der Abgang verbunden ist, an das dem Abgang zugeordnete elektronische Schutzgerät übermittelt und dort gespeichert wird, beispielsweise zur dauerhaften oder bedarfsweisen Anzeige dieser Information am Schutzgerät selbst, und zwar auch dann, wenn die Auswerteeinheit entfernt oder deaktiviert wurde.

Im folgenden werden Ausführungsbeispiele der vorliegenden Erfindung anhand einer Zeichnung näher erläutert. Es sei darauf hingewiesen, dass sämtliche vorstehend und nachfolgend offenbarten Varianten und Ausführungsbeispiele uneingeschränkt miteinander kombinierbar sind, und zwar sowohl hinsichtlich der elektrischen Anlage als auch der Auswerteeinheit als auch des Verfahrens.

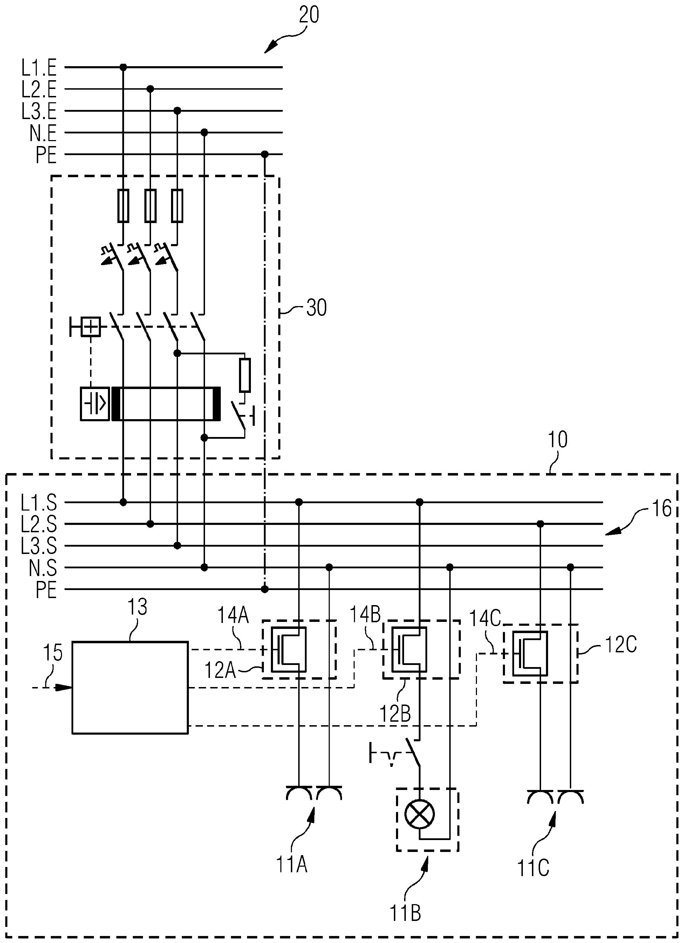

Die einzige Figur zeigt in schematischer Darstellung ein Dreiphasenwechselstromsystem 20, an welches eine (ebenfalls schematisch dargestellte) elektrische Anlage 10 angeschlossen ist. Der Anschluss der elektrischen Anlage 10 an das Dreiphasenwechselstromsystem 20 erfolgt in einer geeigneten Weise mittels fachüblicher Mittel 30, die beispielsweise Schmelzsicherungen und mechanische, elektromechanische, und/oder elektronische Schaltmittel und/oder Schutz(schalt)mittel aufweisen können.

Im in der Figur dargestellten Ausführungsbeispiel weist die elektrische Anlage 10 drei Abgänge 11 auf. Ein erster Abgang 11A versorgt beispielsweise eine Steckdose, ein zweiter Abgang 11B versorgt beispielsweise ein mittels eines Schalters schaltbares Leuchtmittel, und ein dritter Abgang 11C versorgt beispielsweise eine weitere Steckdose. Natürlich ist die Darstellung von drei Abgängen 11 nur beispielhaft; die vorliegende Erfindung ist auch dann anwendbar, wenn nur ein Abgang 11 vorhanden ist, sowie im Zusammenhang mit beliebig vielen Abgängen.

Jedem der Abgänge 11 ist (mindestens) ein entsprechendes elektronisches Schutzgerät 12, auch bekannt als ECPD (Electronic Circuit Protection Device), zugeordnet. Bei den Schutzgeräten kann es sich um elektronische Schutzschaltgeräte handeln. In Ausführungsbeispielen der Erfindung können als SSCB (Solid State Circuit Breaker) oder SCCB (Semiconductor Circuit Breaker) bekannte Halbleiterschaltgeräte eingesetzt werden. Ein Schutzgerät 12 muss aber nicht notwendigerweise eine elektronische Unterbrechungseinheit aufweisen.

Auf die konkrete Ausgestaltung der (Schutz-)Schaltgeräte 12 kommt es mit Blick auf die vorliegende Erfindung nicht an. Wichtig ist lediglich, dass ein Schutzgerät 12, für dessen Abgang 11 die Zuordnung des Abgangs zu einem der Leiter des Dreiphasenwechselstromsystems mittels der vorliegenden Erfindung bestimmt werden soll, über ein Spannungsmessmittel (nicht dargestellt) verfügt sowie über Mittel zum Erzeugen und Übertragen mindestens eines Parameters an eine Auswerteeinheit 13. Daraus folgt, dass nicht alle Schutzgeräte einer elektrischen Anlage mit derartigen Mitteln ausgerüstet sein müssen - für die Verwirklichung der vorliegenden Erfindung genügt es, wenn ein Schutzgerät 12 der elektrischen Anlage 10 über die genannten Mittel verfügt.

Als Spannungsmessmittel können dabei alle dem Fachmann geläufigen Spannungsmessmittel eingesetzt werden. Ein für die Verwendung im Zusammenhang mit der vorliegenden Erfindung geeignetes Schutzgerät weist neben dem Spannungsmessmittel noch Mittel zur Bestimmung eines Parameters auf. Dieser Parameter repräsentiert einen Spannungsmesswert und/oder einen aus zumindest einem Spannungsmesswert abgeleiteten Wert und/oder einen Zeitstempel, der generiert wird, wenn der Momentanwert der Spannung einen konfigurierbaren Wert erreicht. Dem Parameter wird vorzugsweise die Spannung zwischen den beiden Leitern des Abgangs zugrunde gelegt.

Besonders geeignete Parameter sind dabei der Momentanwert der Spannung, der RMS-Wert der Spannung oder Zeitstempel eines maximalen Spannungswerts, eines minimalen Spannungswert und/oder eines Nulldurchgangs der Spannung.

Dieser Parameter wird in geeigneter Form, beispielsweise als analoges oder digitales Signal, über eine gestrichelt dargestellte logische Verbindung 14 an die Auswerteeinheit 13. Die Verbindung 14 kann dabei drahtgebunden oder drahtlos hergestellt werden und dauerhaft oder nur zeitweise oder auch nur einmalig bestehen. Insbesondere drahtlose Übertragungsverfahren wie beispielsweise Bluetooth, WiFi, DECT, KNX-RF oder ZigBee, aber auch drahtgebundene Übertragungsverfahren wie Ethernet, Powerline oder serielle Schnittstellen eignen sich. Denkbar sind auch optische Übertragungsverfahren, beispielsweise Infrarotschnittstellen, insbesondere dann, wenn die Schutzgeräte 12 in einem gemeinsamen Schaltkasten angeordnet sind und eine portable Auswerteeinheit, insbesondere eine in der Hand gehaltene Auswerteeinheit, eingesetzt wird.

Im folgenden wird von der in der Figur dargestellten Situation ausgegangen, dass der erste Abgang 11A und der zweite Abgang 11B mit dem Phasenleiter L1 verbunden sind und dass der dritte Abgang 11C mit dem Phasenleiter L2 verbunden ist. Keiner der Abgänge der in der Figur dargestellten beispielhaften Schaltanlage ist mit dem Phasenleiter L3 verbunden.

Ferner wird davon ausgegangen, dass alle drei Abgänge mit Schutzgeräten 12A-C ausgerüstet sind, die über Verbindungen 14A-C einen oder mehrere der oben genannten Parameter an eine Auswerteeinheit übermitteln können.

Schließlich wird davon ausgegangen, dass die Verbindungen 14A-C bereits hergestellt sind und die störungsfreie Übertragung von mindestens einem Parameter ermöglichen.

In einer Ausgestaltung übertragen alle drei Schutzgeräte 12A-C den Momentanwert der jeweils zwischen den beiden Leitern des jeweiligen Abgangs 11A-C anliegenden Spannung. Den Schutzgeräten zugeordnete Zeitmessmittel sind in diesem Fall nicht erforderlich.

Die Auswerteeinheit empfängt diese Werte. Dabei sind die vom ersten und vom zweiten Schutzgerät 12A, B empfangenen Werte zu jedem Zeitpunkt annähernd gleich, da beide Schutzgeräte an der gleichen Phase angeschlossen sind.

Damit kann die Auswerteeinheit als erstes Ergebnis ausgeben, dass das erste und das zweite Schutzgerät 12A, B am gleichen Phasenleiter angeschlossen sind. In einer Weiterbildung kann dies automatisch mit einem Soll-Zustand abgeglichen werden und eine Meldung ausgegeben werden, wenn dies nicht dem Sollzustand entspricht. Die Werte dienen sich dabei gegenseitig als (relative) Referenz.

Der vom dritten Schutzgerät 12C empfangene (Momentan-)Wert weicht von den vom ersten und vom zweiten Schutzgerät 12A, B empfangenen Werten ab. Die Auswerteeinheit kann damit als weiteres Ergebnis ausgeben, dass das dritte Schutzgerät 12C an einem anderen Phasenleiter angeschlossen ist als die anderen beiden Schutzgeräte. Wiederum kann dies automatisch mit einem Soll-Zustand abgeglichen werden und eine Meldung ausgegeben werden, wenn dies nicht dem Sollzustand entspricht. Die Werte dienen sich auch hier gegenseitig als (relative) Referenz.

Zudem kann die Auswerteeinheit ermitteln, ob die Spannung am dritten Schutzgerät der Spannung am ersten und zweiten Schutzgerät voraus- oder hinterhereilt.

Ist nun eines der Schutzgeräte als absolute Referenz bekannt, d.h. es ist beispielsweise bekannt, dass das erste Schutzgerät am Phasenleiter L1 angeschlossen ist, werden die von diesem Schutzgerät gelieferten Parameter als Referenzwerte behandelt und ausgehend davon kann die Auswerteeinheit aus den beschriebenen relativen Feststellungen absolute Feststellungen ableiten, also beispielsweise dass das zweite Schutzgerät an L1 und das dritte Schutzgerät an L2 angeschlossen ist.

Alternativ kann ein Referenzwert 15 in die Auswerteeinheit eingespeist werden. Dieser Referenzwert kann beispielsweise gewonnen werden, indem die Auswerteeinheit an einen bekannten Leiter des Dreiphasenwechselstromsystems 20 angeschlossen wird, beispielsweise an L1,E, oder an eine davon abgeleitete Signalleitung.

In einer weiteren Ausgestaltung werden als Parameter Zeitstempel genutzt, die entweder von den Schutzgeräten 12 oder durch die Auswerteeinheit 13 erzeugt werden. Letzteres ist insbesondere vorteilhaft, wenn die Auswerteeinheit 13 in eine fest installierte und eine portable, drahtlos verbindbare Komponente aufgeteilt ist (nicht dargestellt) - in diesem Fall erzeugt die festinstallierte Komponente beispielsweise die Zeitstempel und die portable Komponente wertet diese aus.

In vorteilhaften Ausgestaltungen werden die Zeitstempel erzeugt, wenn die Spannung am jeweiligen Schutzgerät den positiven oder negativen Scheitelwert erreicht.

Dabei kann vorgesehen werden, dass das Erreichen eines oberen Schwellwertes oder das Erreichen eines unteren Schwellwertes zur Zeitstempelerzeugung verwendet wird, wobei der obere Schwellwert unterhalb des normalen Scheitelwerts der positiven Halbwelle bzw. der untere Schwellwert oberhalb des normalen Scheitelwerts der negativen Halbwelle liegt. Die Abweichung zwischen Schwellwert und Scheitelwert kann dabei beispielsweise 2%, 3% oder 5% des Scheitelspannungswertes betragen. Der Vergleich des Ist-Wertes der Spannung mit einem der genannten Schwellwerte ist (schaltungstechnisch) einfacher zu realisieren als die Ermittlung des Scheitelpunkts, da für letztere Berechnung mehrere Spannungswerte zwischengespeichert werden müssen. Die Wahl der Schwellwerte trägt dabei dem Umstand Rechnung, dass die Scheitelwerte in bestimmten Lastsituationen absinken.

Die Auswerteeinheit 13 vergleicht die Zeitstempel, die für den ersten Abgang 11A, für den zweiten Abgang 11B und für den dritten Abgang 11C erzeugt wurden. Im dargestellten Beispiel werden die Zeitstempel für den ersten und für den zweiten Abgang 11A, B nicht oder nur unwesentlich voneinander abweichen, während der Zeitstempel für den dritten Abgang 11C um ein Drittel der Periodendauer später liegt, bei einem 50 Hz System also um ungefähr 6,6 ms nach den Zeitstempeln für den ersten und zweiten Abgang (bei einem 60 Hz System 5,5 ms).

Anhand dieser Werte kann die Auswerteeinheit wiederum die relative Lage der an den Abgängen angeschlossenen Phasenleiter zueinander ermitteln, sowie beim Vorliegen eines als absolute Referenz geeigneten Zeitstempels entsprechend die absoluten Beziehungen.

Es sei darauf hingewiesen, dass die Zeitstempel nicht notwendigerweise innerhalb der gleichen Periode erzeugt werden müssen. Die Netzfrequenz öffentlicher Versorgungsnetze ist von einer hinreichend hohen Qualität, dass Sekunden oder sogar mehrere Minuten vergehen können, bevor ein zu einem früheren Zeitpunkt und insbesondere auch an einem anderen Ort für einen Referenzleiter gewonnener Zeitstempel nicht mehr als Referenzparameter geeignet ist. Der zeitliche Abstand der Zeitstempel kann größer gewählt werden, wenn bei der Erstellung des Zeitstempels die aktuelle Netzfrequenz bzw. die aktuelle Netzperiodendauer ermittelt wird und die Abweichung von der Nennfrequenz bzw. von der Nennperiodendauer als Korrekturfaktor in den folgenden Betrachtungen berücksichtigt wird.

Mit anderen Worten kann in einer Ausgestaltung der Erfindung also beispielsweise ein portables Auswertegerät 13 an einem ersten Ort an einen Referenzleiter des Dreiphasenwechselstromsystems, beispielsweise L1, angeschlossen werden, und es wird ein Referenzzeitstempel erzeugt, wenn die Spannung an L1 das Maximum erreicht bzw. den oberen Schwellwert überschreitet. Dieser Referenzzeitstempel wird gespeichert.

Anschließend kann diese Verbindung wieder getrennt werden und die Auswerteeinheit wird an einem zweiten Ort mit einem Schutzgerät 12 gekoppelt (drahtlos oder drahtgebunden, wie weiter oben beschrieben). Das Schutzgerät 12 übermittelt im einfachsten Fall kontinuierlich oder zeitdiskret mit einer hinreichend hohen Abtastrate Spannungswerte und die Auswerteeinheit 13 erzeugt einen Zeitstempel, wenn der von Schutzgerät 12 empfangene Wert den oberen Schwellwert übersteigt; alternativ erzeugt das Schutzgerät 12 selbst den Zeitstempel und übermittelt diesen an die Auswerteeinheit 13. Die Erzeugung des Zeitstempels durch die Auswerteeinheit 13 hat dabei den Vorteil, dass es bei den Uhren, die zur Zeitstempelerzeugung verwendet werden, nicht darauf ankommt, dass diese das gleiche Zeitnormal verwenden, sondern dass es lediglich darauf ankommt, dass die in der Auswerteeinheit 13 integrierte Uhr die beiden (oder mehreren) Zeitstempel relativ zueinander zuverlässig erzeugt, so dass die Zeitdifferenz mit hinreichender Genauigkeit bestimmt werden kann (denn nur die Zeitdifferenz ist hier von Bedeutung); die integrierte Uhr kann dabei mit einem Zeitnormal synchronisiert sein, muss dies aber nicht.

Die Auswerteeinheit 13 vergleicht nun die beiden Zeitstempel. Liegen diese um mehr als die Periodendauer, also 0,02 s bei einem idealen 50 Hz System bzw. 0,016 s bei einem idealen 60 Hz System auseinander, wird vom späteren Zeitstempel solange die Periodendauer subtrahiert, bis die Differenz kleiner ist als die Periodendauer bzw. es wird der Rest der Division der Differenz der Zeitstempel durch die Periodendauer ermittelt, beispielsweise mittels Modulo-Operation: Zeitstempeldifferenz mod Periodendauer. Vorteilhaft wird dabei die bei der Gewinnung des ersten Zeitstempels gemessene Periodendauer bzw. Netzfrequenz zugrunde gelegt, falls diese von der Nennfrequenz abweicht.

Aus dem dann verbleibenden Wert bzw. dem ermittelten Rest kann unmittelbar ermittelt werden, an welcher Phase das Schutzgerät 12 angeschlossen ist: ein Wert von ungefähr 0 s liegt vor, wenn das Schutzgerät an L1 angeschlossen ist; ein Wert von ungefähr einem Drittel der Periodendauer liegt vor, wenn das Schutzgerät an L2 angeschlossen ist und ein Wert von ungefähr zwei Dritteln der Periodendauer liegt vor, wenn das Schutzgerät an L3 angeschlossen ist.

Werden die Zeitstempel in der gleichen Periode erzeugt, vereinfacht sich die Berechnung entsprechend und auf die Genauigkeit der Uhr(en) kommt es in deutlich geringerem Umfang an. Ebenso kommt es auf die Genauigkeit der Uhr(en) weniger an, wenn die Zeitstempel zeitlich nah beieinander liegen, also beispielsweise maximal 10 Sekunden auseinander liegen.

Neben der relativen oder absoluten Zuordnung von Abgang 11 zu einem der Phasenleiter kann mittels der Zeitstempel-basierten Ausgestaltung der Erfindung für mehrphasige Verbraucher auch das Drehfeld automatisch ermittelt werden.

In einer weiteren Ausgestaltung ermitteln die Schutzgeräte 12 den RMS-Wert der Spannung und übertragen diesen Parameter an die Auswerteeinheit 13. Aufgrund von Asymmetrien in den Netzspannungen kann nun anhand der übermittelten Parameter festgestellt werden, welche Abgänge 11 an einer gemeinsamen Phase angeschlossen sind. Eine absolute Zuordnung ist wiederum dann möglich, wenn für mindestens ein Schutzgerät bekannt ist, mit welchem Phasenleiter dieses verbunden ist. Die Auswertung des RMS-Wertes kann insbesondere bei schwachen Netzen und größeren einphasigen Verbrauchern ein zuverlässiges Ergebnis liefern.

Die vorliegende Erfindung ermöglicht es, verschiedene Verdrahtungsfehler automatisch zu erkennen. Die durch Vergleich mit einer absoluten Referenz 15 gewonnene Ist-Zuordnung der Abgänge 12A-C zu den Phasenleitern L1, L2, L3 kann von der Auswerteeinheit 13 oder einer übergeordneten Einheit (nicht dargestellt) beispielsweise mit einer Soll-Zuordnung verglichen werden. Die Soll-Zuordnung kann dabei beispielsweise aus Planungsdaten der elektrischen Anlage 10 automatisch generiert werden. Stimmen Ist-Zuordnung und Soll-Zuordnung überein, kann dies einem Benutzer als positives Ergebnis signalisiert werden; liegt keine Übereinstimmung vor, wird eine entsprechende Fehlermeldung ausgegeben.

Ferner ist es möglich, zu ermitteln, ob an einem Abgang 12 der Nullleiter und der Phasenleiter vertauscht wurden. In diesem Fall entspricht die dort gemessene Spannung dem negativen Wert der Soll-Spannung, was beispielsweise anhand der Zeitstempel einfach detektiert werden kann: das Maximum oder Minimum an einem Abgang mit vertauschten Leitern tritt nicht bei 120° oder 240° bezogen auf den Referenzwert auf, d.h. zeitversetzt nach ungefähr einem oder zwei Drittel(n) der Periodendauer, sondern bei 60°, 180° oder 300°, d.h. zeitversetzt mach ungefähr einem oder drei oder fünf Sechstel(n) der Periodendauer.

Wird ein Vertauschen von L und N an einem Abgang erkannt, wird eine vorzugsweise hochpriore Fehlermeldung generiert und dem Benutzer angezeigt und/oder an eine Zentrale weitergeleitet. In Ausgestaltungen der Erfindung wird zudem das dem entsprechenden Abgang zugeordnete Schaltgerät sofort automatisch ausgeschaltet, um eine Gefahr für Personen und Anlage zu vermeiden.

In Ausgestaltungen der vorliegenden Erfindung kann die Auswerteeinheit, wie bereits erläutert, modular ausgestaltet sein. Neben der bereits erwähnten Ausgestaltung der Module kann auch vorgesehen sein, die Parametererfassung und - auswertung fest einem Schaltschrank zu installieren, einschließlich beispielsweise der Kopplung an einen bekannten Phasenleiter als absolute Referenz 15 oder der Festlegung eines der Schaltgeräte als absolute Referenz, beispielsweise ein Schaltgerät, dessen Verdrahtung mittels 4-Augen-Prinzip sorgfältig geprüft wurde. Dieser Teil der Auswerteeinheit kann komplett ohne Anzeigevorrichtung ausgeführt werden und wird zum Zweck der Überprüfung (beispielsweise im Wege der Endabnahme) mit einem Modul gekoppelt, das lediglich der Anzeige der von dem festinstallierten Modul ermittelten Daten dient. Dieses Anzeigemodul kann in Form einer App auf einem herkömmlichen Mobilgerät realisiert werden, welche mittels Bluetooth oder einer anderen Nahfunktechnik eine Verbindung mit dem festinstallierten Modul aufnimmt.

In Ausgestaltungen der Erfindung kann vorgesehen sein, dass die Messung nur einmalig (wie erwähnt beispielsweise im Wege einer Endabnahme) oder nur zu bestimmten Zeitpunkten (bei Revisionen oder Umbauten an der Anlage) erfolgt und die ermittelten Zuordnungen zwischen Abgang 11 und Phasenleitern L1,S, L2,S und L3,S bzw. L1,E, L2,E und L3,E des Dreiphasenwechselstromsystems 20 in den Schaltgeräten 12 gespeichert und die (portable) Auswerteeinheit anschließend entfernt wird. Auf diese Weise "wissen" die Abgänge 11 der Anlage 10, mit welcher Phase sie jeweils verbunden sind, und diese Information kann später von anderen Komponenten der Anlage 10 (nicht dargestellt) abgerufen und dabei als verlässlich angesehen werden. An den Schutzgeräten kann diese Information angezeigt werden. Beispielsweise können an einem Schutzgerät drei LED vorgesehen werden (je eine pro Phase) und eine der LED leuchtet dauerhaft entsprechend der ermittelten Phase.

In wieder anderen Ausgestaltungen wird die Auswerteeinheit durch die Schutzgeräte 12 selbst gebildet, d.h. zwei oder mehr Schutzgeräte 12 bilden eine verteilte Auswerteeinheit oder ein besonders ausgestattetes Schutzgerät bildet beispielsweise als Masterschutzgerät die Auswerteeinheit und empfängt die Parameter von den anderen Schutzgeräten und nimmt die vorstehenden Auswertungen vor. Vorzugsweise verfügt dieses Masterschutzgerät über eine absolute Referenz oder ermittelt anderenfalls die Zuordnungen der anderen Schutzgeräte zu Phasenleitung relativ zur eigenen Zuordnung.

Die vorstehend beschriebene Erfindung kann unabhängig davon eingesetzt werden, welches Referenzsystem (im Falle einer absoluten Referenz) gewählt wird. Im dargestellten Beispiel kann das Referenzsignal 15 beispielsweise von einem Außenleiter L1,E, L2,E, L3,E des Einspeisesystems 20 abgeleitet werden. Dann können beispielsweise auch Verdrahtungsfehler des Anschlusssystems 30 detektiert werden. In anderen Ausgestaltungen kann das Referenzsignal 15 an einem als zuverlässig verdrahteten Punkt innerhalb des Anschlusssystems 30 erzeugt werden, und in wieder anderen Ausgestaltungen kann der Ausgang des Anschlusssystems 30 als zuverlässig gelten und damit die Zuordnung der Leiter im lokalen Dreiphasensystem 16 der elektrischen Anlage 10, insbesondere deren Außenleiter L1,S, L2,S, L3,S. Es genügt dabei, dass die Zuordnung eines Außenleiters als zuverlässig anzusehen ist.

Die vorliegende Erfindung kann vorteilhaft auch angewendet werden, wenn zwischen der zentralen Einspeisung, beispielsweise also dem öffentlichen Netz, und dem Abgang mehrere, beispielsweise kaskadierte Verteilungen wie beispielsweise Haupt- und/oder Unterverteilungen angeordnet sind, wie dies beispielsweise in großen Gebäuden oder Campusnetzen der Fall ist. Für die beschriebene relative Ermittlung der Zuordnung wird ein externes Referenzsignal 15 ohnehin nicht benötigt und für eine absolute Ermittlung der Zuordnung ist lediglich ein von einem als zuverlässig bekannten Außenleiter abgeleitetes Referenzsignal erforderlich.

Es sei nochmals darauf hingewiesen, dass die vorstehend beschriebenen Ausführungsbeispiele und Ausgestaltungen beliebig miteinander kombiniert werden können. Ferner sei darauf hingewiesen, dass der Begriff "Auswerteeinheit", wie hier verwendet, Prozessoren und Verarbeitungseinheiten im weitesten Sinne umfasst, also beispielsweise Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungseinheiten. Prozessoren können dabei aus einer oder mehreren Vorrichtungen bestehen. Besteht ein Prozessor aus mehreren Vorrichtungen, können diese zur parallelen oder sequentiellen Verarbeitung von Instruktionen konfiguriert sein.

## Patentansprüche

1. Elektrische Anlage (10), die an ein Dreiphasenwechselstromsystem (20) anschließbar ist und folgendes aufweist:
- mindestens einen einphasigen Abgang (11);
- mindestens ein dem einphasigen Abgang (11) zugeordnetes elektronisches Schutzgerät (12), insbesondere ein elektronisches Schutzschaltgerät, mit Spannungsmessmitteln sowie Mitteln zum Übertragen mindestens eines Parameters repräsentierend einen Spannungsmesswert und/oder einen aus zumindest einem Spannungsmesswert abgeleiteten Wert und/oder einen Zeitstempel, der generiert wird, wenn der Momentanwert der Spannung einen konfigurierbaren Wert erreicht; wobei die elektrische Anlage (10) ferner eine Auswerteeinheit (13) aufweist oder mit einer Auswerteeinheit (13) verbindbar ist, welche folgendes aufweist:
- Mittel zum Empfangen des Parameters;
- Mittel zum Vergleichen des Parameters mit einem Referenzwert; und
- Mittel zum Ermitteln anhand des Ergebnisses des Vergleichs, mit welchem Leiter des Dreiphasenwechselstromsystems (20) der Abgang (11) verbunden ist.

2. Elektrische Anlage (10) nach Anspruch 1, deren elektronisches Schutzgerät (12) Mittel zum Ermitteln und Übertragen eines oder mehrerer der folgenden Parameter aufweist:
- Momentanspannungswert;
- RMS-Wert der Spannung;
- Zeitstempel eines maximalen Spannungswerts;
- Zeitstempel eines minimalen Spannungswerts;
- Zeitstempel eines Nulldurchgangs der Spannung; und/oder
- aktuelle Netzfrequenz.

3. Elektrische Anlage (10) nach einem der vorhergehenden Ansprüche, die eine Auswerteeinheit (13) aufweist oder mit einer Auswerteeinheit (13) verbindbar ist, welche einen oder mehrere der folgenden Referenzwerte ermittelt:
- Momentanspannungswert eines Referenzphasenleiters des Dreiphasenwechselstromsystems;
- Zeitstempel eines maximalen Spannungswerts eines Referenzphasenleiters des Dreiphasenwechselstromsystems;
- Zeitstempel eines minimalen Spannungswerts eines Referenzphasenleiters des Dreiphasenwechselstromsystems; und/oder
- Zeitstempel eines Nulldurchgangs der Spannung eines Referenzphasenleiters des Dreiphasenwechselstromsystems.

4. Elektrische Anlage (10) nach Anspruch 3, die eine Auswerteeinheit (13) aufweist oder mit einer Auswerteeinheit (13) verbindbar ist, welche mit dem Referenzphasenleiter des Dreiphasenwechselstromsystems (20) verbunden oder gekoppelt ist.

5. Elektrische Anlage (10) nach einem der vorhergehenden Ansprüche, die zusätzlich folgendes aufweist:
- mindestens einen weiteren einphasigen Abgang (11);
- mindestens ein dem weiteren einphasigen Abgang (11) zugeordnetes weiteres elektronisches Schutzgerät (12), insbesondere ein weiteres elektronisches Schutzschaltgerät, mit Spannungsmessmitteln sowie Mitteln zum Übertragen mindestens eines Parameters repräsentierend einen Spannungsmesswert und/oder einen aus zumindest einem Spannungsmesswert abgeleiteten Wert und/oder einen Zeitstempel, der generiert wird, wenn der Momentanwert der Spannung einen konfigurierbaren Wert erreicht;
wobei die die elektrische Anlage (10) eine Auswerteeinheit (13) aufweist oder mit einer Auswerteeinheit (13) verbindbar ist, welche den oder die von einem der Schutzgeräte (12A, 12B, 12C) gelieferten Parameter als Referenzwert(e) oder weitere(n) Referenzwert(e) nutzt.

6. Elektrische Anlage (10) nach einem der vorhergehenden Ansprüche, die eine visuelle Anzeige aufweist oder mit einer visuellen Anzeige verbindbar ist, welche anzeigt, mit welchem Leiter des Dreiphasenwechselstromsystems (20) der Abgang (11) und/oder der weitere Abgang (11) verbunden ist.

7. Elektrische Anlage (10) nach einem der vorhergehenden Ansprüche, die eine Auswerteeinheit (13) aufweist oder mit einer Auswerteeinheit (13) verbindbar ist, welche ein Warnsignal ausgibt und/oder eine Warnmeldung an eine übergeordnete Einrichtung übermittelt und/oder den Abgang abschaltet, wenn anhand des Vergleichs des Parameters mit dem Referenzwert festgestellt wird, dass an dem Abgang (11) der Nullleiter mit dem Phasenleiter vertauscht ist.

8. Elektrische Anlage (10) nach einem der vorhergehenden Ansprüche, die eine Auswerteeinheit (13) aufweist oder mit einer Auswerteeinheit (13) verbindbar ist, welche für mehrere einphasige Abgänge (11) ermittelt, mit welchem Leiter des Dreiphasenwechselstromsystems (20) der jeweilige Abgang (11) verbunden ist und automatisch prüft, ob die so ermittelte Ist-Zuordnung einer Soll-Zuordnung entspricht, und das Ergebnis dieser Prüfung, insbesondere Abweichungen, ausgibt.

9. Elektrische Anlage (10) nach einem der vorhergehenden Ansprüche, die eine Auswerteeinheit (13) aufweist oder mit einer Auswerteeinheit (13) verbindbar ist, welche die ermittelte Ist-Zuordnung, mit welchem Leiter des Dreiphasenwechselstromsystems der Abgang (11) verbunden ist, an das dem Abgang (11) zugeordnete elektronische Schutzgerät (12) übermittelt, wobei diese Ist-Zuordnung im elektronischen Schutzgerät (12) gespeichert wird.

10. Auswerteeinheit (10) mit Mitteln zum Verbinden mit einem elektronischen Schutzgerät (12), welches einem einphasigen Abgang (11) eines Dreiphasenwechselstromsystems (20) zugeordnet ist und welches einen Parameter repräsentierend einen Spannungsmesswert und/oder einen aus zumindest einem Spannungsmesswert abgeleiteten Wert und/oder einen Zeitstempel, der generiert wird, wenn der Momentanwert der Spannung einen konfigurierbaren Wert erreicht, bereitstellt, die Auswerteeinheit (10) aufweisend:
- Mittel zum Empfangen des Parameters;
- Mittel zum Vergleichen des Parameters mit einem Referenzwert; und
- Mittel zum Ermitteln anhand des Ergebnisses des Vergleichs, mit welchem Leiter des Dreiphasenwechselstromsystems (20) der Abgang (11) verbunden ist.

11. Verfahren zum Betreiben einer an ein Dreiphasenwechselstromsystem (20) anschließbaren elektrischen Anlage (10), mit folgenden Schritten:
- Ermitteln eines Parameters repräsentierend einen Spannungsmesswert und/oder einen aus zumindest einem Spannungsmesswert abgeleiteten Wert und/oder einen Zeitstempel, der generiert wird, wenn der Momentanwert der Spannung einen konfigurierbaren Wert erreicht, durch ein einem einphasigen Abgang (11) zugeordnetes elektronisches Schutzgerät (12), insbesondere ein elektronisches Schutzschaltgerät;
- Vergleichen des Parameters mit einem Referenzwert; und
- Ermitteln anhand des Ergebnisses des Vergleichs, mit welchem Leiter des Dreiphasenwechselstromsystems der Abgang (11) verbunden ist.

12. Verfahren nach Anspruch 11, bei dem der Parameter ausgewählt wird aus der Gruppe:
- Momentanspannungswert;
- RMS-Wert der Spannung;
- Zeitstempel eines maximalen Spannungswerts;
- Zeitstempel eines minimalen Spannungswerts;
- Zeitstempel eines Nulldurchgangs der Spannung; und/oder
- aktuelle Netzfrequenz;
und bei dem der Referenzwert ausgewählt wird aus der Gruppe:
- Momentanspannungswert eines Referenzphasenleiters des Dreiphasenwechselstromsystems;
- Zeitstempel eines maximalen Spannungswerts eines Referenzphasenleiters des Dreiphasenwechselstromsystems;
- Zeitstempel eines minimalen Spannungswerts eines Referenzphasenleiters des Dreiphasenwechselstromsystems; und/oder
- Zeitstempel eines Nulldurchgangs der Spannung eines Referenzphasenleiters des Dreiphasenwechselstromsystems.

13. Verfahren nach einem der Ansprüche 11 oder 12, das zusätzlich folgende Schritte aufweist:
- Ermitteln eines weiteren Parameters repräsentierend einen Spannungsmesswert und/oder einen aus zumindest einem Spannungsmesswert abgeleiteten Wert und/oder einen Zeitstempel, der generiert wird, wenn der Momentanwert der Spannung einen konfigurierbaren Wert erreicht, durch ein einem weiteren einphasigen Abgang (11) zugeordnetes elektronisches weiteres Schutzgerät (12), insbesondere ein weiteres elektronisches Schutzschaltgerät;
- Verwenden des weiteren Parameters als Referenzwert.

14. Verfahren nach einem der Ansprüche 11 bis 13, das zusätzlich folgende Schritte aufweist:
- Anzeigen, mit welchem Leiter des Dreiphasenwechselstromsystems der Abgang (11) und/oder der weitere Abgang (11) verbunden ist; und/oder
- Ausgeben eines Warnsignals und/oder Übermitteln einer Warnmeldung an eine übergeordnete Einrichtung und/oder Abschalten des Abgangs, wenn anhand des Vergleichs des Parameters mit dem Referenzwert festgestellt wird, dass an dem Abgang (11) der Nullleiter mit dem Phasenleiter vertauscht ist.

15. Verfahren nach einem der Ansprüche 11 bis 14, das zusätzlich folgende Schritte aufweist:
- Ermitteln, für mehrere einphasige Abgänge (11), mit welchem Leiter des Dreiphasenwechselstromsystems der jeweilige Abgang (11) verbunden ist;
- Prüfen, ob die so ermittelte Ist-Zuordnung einer Soll-Zuordnung entspricht; und
- Ausgeben des Ergebnisses dieser Prüfung, insbesondere Abweichungen der Ist-Zuordnung von der Soll-Zuordnung.
